# FASCICULE DE BREVET EUROPEEN

(11) **EP 0 985 335 B1**
(45) Date de publication et mention de la délivrance du brevet: **02.04.2003**
(21) Numéro de dépôt: 99470018.5
(22) Date de dépôt: 08.09.1999
(51) Int. Cl.: A01B 1/14

(54) **Fraise à labourer**
Kultivatorfräse
Tilling cultivator

(30) Priorité: 08.09.1998 FR 9811385
(43) Date de publication de la demande: 15.03.2000
(73) Titulaire: Izkandar, Santi, 54360 Barbonville (FR)
(72) Inventeur: Izkandar, Santi, 54360 Barbonville (FR)
(74) Mandataire: Bentz, Jean-Paul

(56) Documents cités:
- DE-C- 21 789
- DE-C- 19 602 202
- DE-U- 9 413 329
- FR-A- 2 720 890
- US-A- 5 706 900

## Description

L'invention concerne un outil de jardinage du type fraise de labour et affinage de la terre de jardin par rotation d'un quart de tour à droite de l'appareil, le corps de l'opérateur restant en position verticale ce qui est beaucoup moins fatigant.

Jusqu'à présent les outils utilisés sont représentés par des bêches en lame pleine ou à dents parallèles qui obligent à un mouvement pénible pour le dos, les jambes et surtout les reins.

Depuis peu on trouve sur le marché des outils dits Griffe de Jardin réalisés en fil de fer de 6mm de section plus ou moins recourbé dont la conception permet les travaux de surfaçage ainsi que leur nom l'indique mais n'ont nullement la vocation du labour.

Un tel outil de jardinage est connu du document FR 2 720 890 A.

Le labour est l'opération annuelle essentielle à la préparation de la terre consistant à faire remonter la terre du fond de jauge en surface de façon à ce quelle soit assainie par les gelées hivernales et la germination du printemps-été pour le réchauffement.

Une fraise à labourer est conçue pour cela par la forme et le calage spécifique des dents et permet en même temps toutes les autres opérations d'affinage, binage, émiettage etc.

Dans l'invention présente, l'outil considéré est une tête de fraise à quatre dents pour labourer et façonner la terre de jardin, le corps restant en position verticale en imprimant à l'outil un mouvement rotatif horizontal d'un quart de tour à droite afin de faire pénétrer les dents en terre et déjauger verticalement afin de faire remonter la terre du fond de jauge en surface grâce justement à la forme spéciale des dents et à leur calage spécifique.

Cette solution est beaucoup moins fatigante que le bêchage traditionnel et plus rapide parce-que l'on travaille sur 180 à 200 mm de diamètre alors que la bêche normale ne prend que 50 à 100 mm de terre pour un bon labour, de plus le mouvement de la fraise est beaucoup plus rapide.

Pour l'émiettage qui suit le labour il suffit de répéter la même opération, un quart de tour à droite, mais suivi cette fois d'un quart à gauche .

L'outil de jardinage pour labourer et façonner la terre selon la présente invention comprend :
1 ) un mancheron horizontal muni d'une poignée à chaque extrémité et dont le tube présente un déport de 30mm en sa partie centrale, ceci pour permettre un réglage en hauteur en retournant le mancheron de 180 degrés, le mancheron s'encastrant au manche par un tube en demi lune et fixé par deux étriers,
2) un manche comportant soudé à sa partie supérieure, un fer creux en demi lune de 100 mm de longueur et fixation par deux étriers de serrage; la partie basse du manche sera elle fendue en son diamètre sur 50 mm de hauteur et deux trous pour passage d'une vis de fixation serrage de 8 mm à la base de la fente et perpendiculaire à celle-ci,
3) une tête de fraise équipée de quatre dents équidistantes en acier forgé et réalisées à partir de fers plats de 12 mm de largeur et 3,5 mm d'épaisseur qui seront courbés à 95° d'ouverture vers le bas à 80 mm de l'axe du manche , puis la dent forgée commençant 60 mm plus bas aplatie en forme de feuille étroite de 20mm de large et spatulée légèrement incurvée un peu comme une cuillère et aiguisée sur son pourtour intérieur et extérieur laissant apparaître une arête de renfort en son centre, cette dent sera calée comme suit face à la marche inclinée de 50° par rapport à la verticale puis de 15° vers l'épicentre du cercle formé par les dents sur son axe longitudinal et enfin la tête de dent à 5 ou 10° à l'intérieur du cercle de circonférence décrit par les dents, ceci pour mieux remonter la terre du fond en surface et tous ces réglages pour provoquer un effet naturel de vrille incitant l'outil à pénétrer en terre sans effort, le bras de dents sera également affûté face à la marche pour la moindre résistance en terre, les fers plats seront brasés à une collerette de 60mm de diamètre à laquelle sera également brasé le tube de fixation muni en son centre d'une cloison s'encastrant dans la fente du manche et formant blocage, enfin les trous de vis de serrage servant d'axe.

### Explication des figures

1 : Poignée de mancheron en forme d'olive pour mieux accompagner le débattement des poignets pour plus de confort.
2 : Déport du mancheron de 30 mm pour réglage de la hauteur par retournement de celui-ci.
3 : Etrier de serrage du mancheron sur le tube en demi lune soudé au sommet du manche
4 : Fente axiale en bas du manche pour recevoir la clavette de blocage de la tête de fraise
5 : Axe fileté pour blocage et serrage de la tête de fraise
6 : Détail transversal de la clavette de blocage
7 : Axe fileté de blocage et serrage
8 : Passage de l'axe fileté de serrage
9 : Clavette de blocage soudée ou tube d'emmanchement
10 : Vue de profil de la jambe de force d'une dent aiguisée fortement face à la marche.
11 : Vue de dos du fer plat de la jambe de force d'une dent.
12 : Forme de la tête de dent avec son arête centrale de renforcement et sa forme incurvée ainsi que son calage à 50° vers le sol.

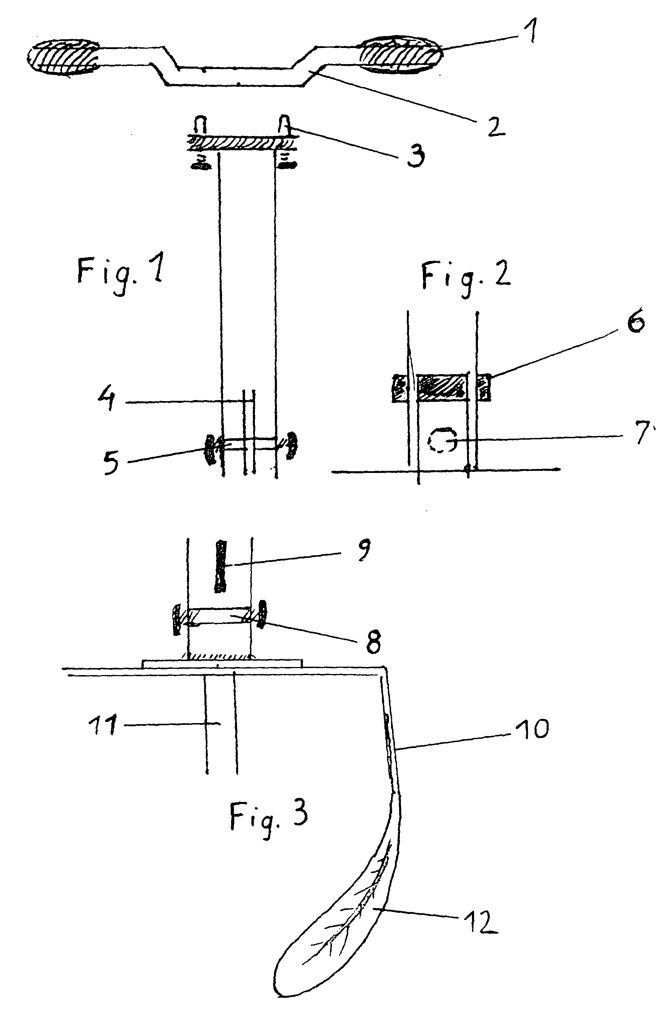

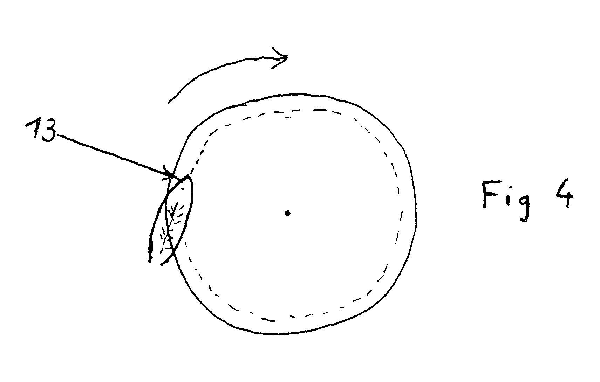

### Explication de la figure 4

13 Calage de la tête de dent en légère dérive de 5 à 10 ° à l'intérieur du cercle défini par l'emprise de travail de l'engin au sol.

## Revendications

1. Outil de jardinage pour labourer et façonner la terre de jardin **caractérisé en ce qu'**il comprend trois éléments :
- un manche,
- un mancheron horizontal muni d'une poignée (1) à chaque extrémité et s'encastrant au manche,
- une tête de fraise équipée de dents (10, 12) équidistantes en acier forgé et courbés vers le bas à distance de l'axe du manche, puis la dent forgée (12) commençant plus bas aplatie en forme de feuille étroite et spatulée légèrement incurvée comme une cuillère et aiguisée sur son pourtour et laissant apparaître une arête de renfort en son centre, cette dent étant orientée face à la marche inclinée par rapport à la verticale puis vers l'épicentre du cercle formé par les dents, et enfin la tête de dent se trouvant à l'intérieur du cercle de circonférence décrit par les dents, ceci pour mieux remonter la terre du fond en surface, et tous ces réglages étant éffectués pour provoquer un effet naturel de vrille incitant l'outil à pénétrer en terre sans effort, le bras (10) des dents étant également affûté face à la marche pour la moindre résistance en terre.

2. Outil de jardinage selon la revendication 1, **caractérisé en ce que** le tube du mancheron présente un déport (2) en sa partie centrale, ceci pour permettre un réglage en hauteur en retournant le mancheron de 180 degrés, le mancheron s'encastrant au manche par un tube en demi lune et fixé par deux étriers (3).

3. Outil de jardinage selon la revendication 1, **caractérisé en ce que** le manche comporte, soudé à sa partie supérieure, un fer creux en demi lune pour l'encastrement du mancheron et une fixation par deux étriers de serrage (3).

4. Outil de jardinage selon la revendication 1, **caractérisé en ce que** la partie basse du manche est fendue (4) selon son diamètre et comporte deux trous pour le passage d'une vis (5) de fixation et serrage à la base de la fente (4) et perpendiculaire à celle-ci.

5. Outil de jardinage selon la revendication 1, **caractérisé en ce que** les dents sont réalisées à partir de fers plats qui sont courbés à 95° d'ouverture vers le bas à 80 mm de l'axe du manche, puis la dent forgée (12) commençant 60 mm plus bas aplatie en forme de feuille étroite de 20mm de large.

6. Outil de jardinage selon la revendication 1, **caractérisé en ce que** la dent est calée comme suit face à la marche : inclinée de 50° par rapport à la verticale puis de 15° vers l'épicentre du cercle formé par les dents sur son axe longitudinal et enfin la tête de dent à 5 ou 10° à l'intérieur du cercle de circonférence décrit par les dents.

7. Outil de jardinage selon la revendication 5, **caractérisé en ce que** les fers plats sont brasés à une collerette à laquelle est également brasé un tube de fixation muni en son centre d'une cloison (6) s'encastrant dans la fente (4) du manche et formant un blocage.

## Claims

1. A gardening tool for tilling and working the garden soil,
**characterised in that** it comprises three components:
- a handle,
- a horizontal handlebar fitted with a grip (1) at each end and fitting on the handle,
- a cutter head equipped with equidistant teeth (10, 12) made from forged steel and curved downwards at a distance from the shaft of the handle, then the forged tooth (12) that starts lower flattened in the shape of a narrow, spatulate leaf slightly incurvated like a spoon and sharpened over its periphery and leaving a reinforcing edge visible in its centre, this tooth being directed in the direction of movement inclined in relation to the vertical then towards the epicentre of the circle formed by the teeth, and finally the tooth head being situated inside the circle having a circumference described by the teeth, so as to better raise the soil from the bottom to the surface, and all these controls being performed to induce a natural corkscrew effect which causes the tool to penetrate the soil without any effort, the arm (10) of the teeth also being sharpened in the direction of movement for the least resistance in the soil.

2. A gardening tool according to Claim 1,
**characterised in that** the tube of the handlebar has an offset (2) at its central part, to allow the height to be regulated by turning the handlebar by 180 degrees, the handlebar fitting on the handle by a half-moon tube and fixed by two clamps (3).

3. A gardening tool according to Claim 1,
**characterised in that** the handle comprises, welded to its upper part, a half-moon hollow bar for the fitting of the handlebar and attachment by two clamps (3).

4. A gardening tool according to Claim 1,
**characterised in that** the low part of the handle is slit (4) along its diameter and comprises two holes for the passage of a screw (5) for fastening and locking to the base of the slit (4) and perpendicular thereto.

5. A gardening tool according to Claim 1,
**characterised in that** the teeth are made from flat bars which are curved with 95° opening downwards at 80 mm from the shaft of the handle, then the forged tooth (12) beginning 60 mm lower down flattened in the shape of a narrow leaf which is 20 mm wide.

6. A gardening tool according to Claim 1,
**characterised in that** the tooth is wedged as follows in the direction of movement: inclined by 50° in relation to the vertical then by 15° towards the epicentre of the circle formed by the teeth on its longitudinal axis and finally the tooth head 5 or 10° inside the circle having a circumference described by the teeth.

7. A gardening tool according to Claim 5,
**characterised in that** the flat bars are soldered to a flange onto which there is also soldered a fastening tube, which is equipped in its centre with a partition fitting into the slot (4) of the handle and forming a catch.

## Patentansprüche

1. Gartengerät, um den Gartenboden aufzulockern und zu kultivieren, **dadurch gekennzeichnet, dass** es drei Elemente aufweist:
- einen Stiel,
- einen im Stiel eingefaßten, waagerechten Lenkholm mit einem Griff (1) an jedem Ende,
- einen Fräskopf mit Zinken (10, 12) in gleichem Abstand aus geschmiedetem Stahl, die in Abstand zur Achse des Stiels nach unten gekrümmt sind, wobei die weiter unten beginnende, geschmiedete Zinke (12) abgeflacht in Form eines schmalen, spatelförmigen Blattes leicht wie ein Löffel nach innen gebogen ist und mit scharfen Umfangskanten und einem Verstärkungsgrat in ihrer Mitte ausgebildet ist, wobei diese Zinke in Bewegungsrichtung zur Senkrechten und dann zum Epizentrum des von den Zinken gebildeten Kreises geneigt ist, und schließlich der Zinkenkopf sich im Inneren des von den Zinken umschriebenen Umfangskreises befindet, um die Erde besser von unten an die Oberfläche zu bringen, wobei alle diese Einstellungen durchgeführt werden, um eine natürliche Bohrwirkung zu erzeugen, durch die das Gerät mühelos in den Boden eindringen kann, wobei der Arm (10) der Zinke ebenfalls in Bewegungsrichtung für einen geringeren Bodenwiderstand geschliffen ist.

2. Gartengerät nach Anspruch 1, **dadurch gekennzeichnet, dass** das Rohr des Lenkholms in seinem mittleren Bereich eine Profilverschiebung (2) aufweist, um durch Verdrehen des Lenkholms um 180 Grad eine Höhenverstellung zu ermöglichen, wobei der Lenkholm in den Stiel über ein sichelförmiges Rohr eingefügt und durch zwei Bügel befestigt ist.

3. Gartengerät nach Anspruch 1, **dadurch gekennzeichnet, dass** der Stiel ein sichelförmiges hohles Eisen aufweist, das an seinen oberen Bereich geschweißt ist, um das Einfügen des Lenkholms und eine Befestigung durch zwei Klemmbügel (3) zu ermöglichen.

4. Gartengerät nach Anspruch 1, **dadurch gekennzeichnet, dass** der untere Bereich des Stiels gemäß seinem Durchmesser geschlitzt (4) ist und zwei Löcher für den Durchlass einer Befestigungs- und Stellschraube (5) am Grund des Schlitzes (4) und senkrecht zu diesem, aufweist.

5. Gartengerät nach Anspruch 1, **dadurch gekennzeichnet, dass** die Zinken aus Flacheisen, die in 80 mm Abstand von der Stielachse eine Öffnungskrümmung von 95° nach unten aufweisen, und dann der 60 mm weiter unten beginnenden, geschmiedeten Zinke (12) hergestellt werden, die abgeflacht in Form eines schmalen Blattes mit einer Breite von 20 mm vorliegt.

6. Gartengerät nach Anspruch 1, **dadurch gekennzeichnet, dass** die Zinke folgendermaßen in Bewegungsrichtung blockiert ist: um 50° zur Senkrechten und dann um 15° zum Epizentrum des von den Zinken auf seiner Längsachse gebildeten Kreises geneigt, und schließlich der Zinkenkopf um 5° oder 10° innerhalb des von den Zinken umschriebenen Umfangskreises geneigt.

7. Gartengerät nach Anspruch 5, **dadurch gekennzeichnet, dass** die Flacheisen an einen Kragen gelötet sind, an den außerdem ein Befestigungsrohr gelötet ist, das in seiner Mitte mit einer Trennwand (6) versehen ist, die in den Schlitz (4) des Stiels eingefügt ist und eine Blockierung bildet.
